# EUROPEAN PATENT SPECIFICATION

(11) **EP 2 477 136 B1**
(45) Date of publication and mention of the grant of the patent: **11.04.2018**
(21) Application number: 12000082.3
(22) Date of filing: 09.01.2012
(51) Int. Cl.: G06F 21/30

(54) **Method for continuously verifying user identity via keystroke dynamics**
Verfahren zur kontinuierlichen Überprüfung der Benutzeridentität über die Tastenanschlagsdynamik
Procédé pour la vérification continue de l'identité de l'utilisateur via des dynamiques de frappes

(30) Priority: 17.01.2011 IL 21069811
(43) Date of publication of application: 18.07.2012
(73) Proprietor: Deutsche Telekom AG, 53113 Bonn (DE)
(72) Inventor: Shimshon, Tomer, Kiryat Gat (IL); Moskovitch, Robert, Tel Aviv (IL); Rokach, Lior, Omer (IL); Elovici, Yuval, . (IL)
(74) Representative: Flaccus, Rolf-Dieter

(56) References cited:
- US-A- 4 805 222
- US-A1- 2006 242 424
- US-A1- 2008 098 222

## Description

### Field of the Invention

The present invention relates to the field of user verification. More particularly, the invention relates to continuously verifying users according to characteristics of their interaction with the keyboard of the computer.

### Background of the Invention

Currently, most computer systems authenticate users based on their user name and password. However, a computer station that a legitimate user has logged into may be exploited by an illegitimate user locally or remotely when the user leaves the station. Thus, additional security means is required to continuously verify the user. Potentially, useful solutions can be found in biometrics, physiological or behavioral.

Physiological biometrics refers to physical measurements of the human body, such as fingerprints, face, hand (palm) geometry, and iris. Physiological biometrics, which soften relies on a snapshot in which user measurements are scanned, is more suitable for a single authentication, rather than for continuous verification. Moreover, most of the physiological biometrics (e.g., iris scan, fingerprints) are irrelevant for continuous verification, since they are intrusive, expensive and unavailable for Web applications. On the other hand, behavioral biometrics relates to a specific behavior of a user along time while performing some task, such as signature writing, speaking, typing etc.

Keystroke dynamics are considered suitable for continuously verifying users since the keyboard is an essential cheap and available interacting device. In addition, the keyboard is not annoying and intrusive as opposed to physiological biometrics.
Several studies have examined the use of keystroke dynamics for continuous verification. In these studies the user's typing patterns are captured, learned, and used for identifying and authenticating the user. While current keystroke dynamic methods for continuous verification obtain some detection performance, they require long sessions and significant amounts of keystrokes to reliably verify users.

Keystroke or typing dynamics, is the detailed timing information that describes exactly when each key is depressed and released while a user is typing on the computer keyboard. Pressing a keystroke (ks) generates three timing basic events: key down event (ks^{D}), key up event (ks^{U}) and key press event (ks^{P}). Key down or key up occur when the key is depressed or released respectively, while key press is fired when an actual character is being inserted into the text. The atomic events are used to extract features from the interaction with the keyboard. The extracted features are divided into temporal and global features. Global features describe the general typing behavior of users, such as frequency of errors (e.g., the use of backspace and delete), frequency of control keys (e.g., Shift, Control, Alt, left, right), and overall typing speed (keystrokes or words per minute). Temporal features refer to the typing style of specific keystrokes or their combinations. Temporal features are calculated based on the time stamps that are indicated when the key is depressed or released.

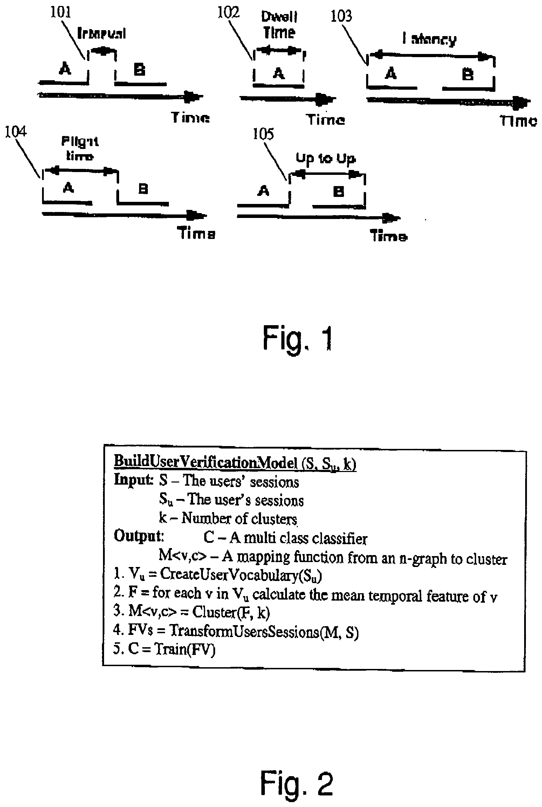

Fig. 1 depicts five temporal features, known in the art that can be extracted from a keystroke or from two successive keystrokes. A set of two successive keystrokes is referred hereinafter as 'di-graph'. 'Interval' feature 101 measures the time from releasing a key to the time when the next key is depressed. 'Dwell' feature 102, also referred as 'held time', measures the time duration between the key being depressed and its corresponding release. 'Latency' 103, 'flight time' 104, and 'up to up' 105, which provide alternative measures for two consecutive keystrokes, can be constructed by the 'dwell' and 'interval' time measures. Typically, the temporal features are extracted from a keystroke sequence which is also known as a sample or a session, based on a di-graph, tri-graph (three consecutive keystrokes), or n-graph segment of the entire sequence.

Verification methods can be evaluated using the following standard measurements:
1. False Reject Rate (FRR) - the rate at which a legitimate user is rejected by the system.
2. False Acceptance Rate (FAR) - the rate at which an imposter is wrongly accepted by the system
3. Error Rate (ER) - an integrative measure for comparison purposes, which is actually an average of the FAR and FRR measures.
4. Error Curve (EC) - every threshold (pₜ) has its corresponding FAR and FRR, the y-axis in the EC describes the FRR and the x-axis describes the FRR for various thresholds
5. Area Under Curve (AUC) - The area under curve which is used for comparing different numbers of clusters. Since the purpose of any verification system in general and of continuous verification using keystroke dynamics in particular, is to minimize both the FAR and the FRR measurements, verification methods aim for minimum AUC.

One research which suggests identifying users based on free text is Monrose, F. and Rubin, A. 1997. Authentication via keystroke dynamics. In Proc. of the 4th ACM Conf on Computer and Communications Security. ACM Press, New York, 48-56 (Monrose et al.). Monrose et al. use two temporal features, the interval time and the dwell time of di-graphs, in order to build a user profile. These profiles underwent a preprocessing to detect and remove outliers. Then, the profiles are used for identifying a new session based on one of three proposed classifiers, namely, 'Euclidean distance', 'nonweighted probability', and 'weighted probability'. However, the performances of the three classifiers are very poor in verifying users based on free text. The 'weighted probability' classifier which presented as the superior classifier delivered an accuracy of only 23%. Monrose et al. suggest generating an identification session every one minute. Monrose et al. ignore the number of keystrokes contained in the session. Therefore, this approach is not suitable for real-life conditions, in which a user can type many (dozens and even hundreds) keystrokes in one minute, and in the minute after, the same user can type only a few keystrokes. The change in the typing speed which depends on many factors (e.g., application, typed language etc) is not considered by Monrose et al.

Another method for verifying users is suggested by M. Nisenson, I. Yariv, R. El-Yaniv, and R. Meir. Towards behaviometric security systems: Learning to identify a typist. In Principles and Practice of Knowledge Discovery in Databases, LNAI 2838, pp. 363-374, Berlin, 2003. Springer-Verlag (Nisenson et al.). Nisenson et al. suggest using the Lempel-Ziv algorithm, which was originally designed to compress sequences via variable rate coding, in order to verify users based on their typing rhythm. Based on the LZ78 algorithm, their method built a weighted tree from the typing of the user. The algorithm then calculates the probability estimate for traversing from a parent node to one of its children. In the verification process, the user is authenticated as the user who typed the session if the probability of the session, given his weighted tree, is higher than a predefined threshold. Additionally, although their method achieved 96.77% accuracy, their data collection was based on only five users, and three of them had only five sessions. This amount of data is insufficient from a statistical standpoint.

D. Gunetti and C. Picardi, Keystroke analysis of free text. ACM Trans. Inf. Syst. Secur., 8(3):312-347, 2005 (Gunetti et al.) also suggest a method for verifying users. Gunetti et al suggest an approach based on the duration of an n-graph, which is the elapsed time between the depression 5 of the first and of the nth (the last) key of a sequence of n keystrokes. After extracting the temporal features of the n-graphs, Gunetti et al. calculate the distance between two sessions that share k n-graphs, based on two proposed measures. The first measure, called the "R" (relative) measure, calculates the distance between two sessions as the normalized disorder between them. The second measure, which is referred to as the "A" (absolute) measure, considers the absolute values of the temporal features.

When the relative and the absolute methods are combined, good results are achieved (0.03% FAR and 3% FRR). However, achieving such results requires collecting sessions consisting of 700 to 900 keystrokes, which means that the authentication process conducted after the user typed 700 to 900 keystrokes, which does not lead to a fast detection of an unauthorized user. On the other hand, when the number of keystrokes is reduced to a quarter of the original length, about 200 keystrokes, the accuracy dropped dramatically to 0.39% FAR and 29% FRR.

US 4,805,222 discloses a device and method for verifying the identity of an individual based on keystroke dynamics by comparing a template for the individual based on time periods between keystrokes ad keystroke pressure measurements to extracted features.

US 2008/098222 discloses a method for user authentication based on typing characteristics. After a reference typeprint for the user is generated, an inputted password is received from the user. Afterwards a second typeprint based on the inputted password is generated. The second typeprint is compared with the reference typeprint, and the user is allowed access if the second typeprint is found to be sufficiently similar to the reference typeprint.

US 2006/242424 discloses a system and method for identity authentication based on keystroke latencies using an adaptive neural network as a user types certain key combinations while determining whether the keystroke latencies match a stored latency profile for the current user.

None of the currently available techniques provide a satisfying solution for time-constrained verification. Therefore, there is a need for a method based on behavioral biometrics of keystrokes which is adapted to verify the identity of a user, which incorporates the important benefits of prior art techniques, and allows increasing the verification accuracy and reducing the verification time.

It is therefore an object of the present invention to provide a method for substantially reducing the time which is necessary for detecting an imposter.

Another object of the present invention is to provide a method for reducing the number of keystrokes used for creating a features vector without reducing the verification accuracy.

Yet another object of the present invention is to provide a method.

### Summary of the Invention

The invention is set out in the appended set of claims.

In a first aspect, the invention is directed to a method of verifying the identity of users according to their interaction with a keyboard device of a computer, comprising: (i) in a training phase in which a group of users are trained: (a) recording input streams of keystrokes performed by each of the trained users; (b) joining similar pairs of consecutive keystrokes based on their temporal features; (c) extracting from each input stream of keystrokes a features vector to create a user verification model representing the user typing patterns; (ii) in a verification phase in which real-time streams of keystrokes are verified: (a) recording input streams of keystrokes performed by a verified user; (b) transforming each of the stream to a features vector; (c) generating a vector of probabilities indicating the probabilities that the features vector belongs to each user; and (d) classifying the stream of keystrokes and associating it with the user with the highest probability.

In one embodiment, the method further comprises defining a threshold for controlling the system's measures, wherein the measures are taken from the group consisting: FAR, FRR, ER, EC, and AUC.

In one embodiment, the real-time streams of keystrokes may be ceaselessly verified, thereby providing a continuous verification.

In one embodiment, multi-class classification may be employed, in which a classifier is trained on the users, which one of them is the verified user.

In one embodiment, the means of the temporal features may be clustered into k clusters and wherein an optimal size is determined for k, in order to get the best representation of the user's typing.

### Brief Description of the Drawings

The above and other characteristics and advantages of the invention will be better understood through the following illustrative and non-limitative detailed description of embodiments thereof, with reference to the appended drawings, wherein:
- Fig. 1 schematically illustrates the layers partitions of the fast memory;
- Fig. 2 presents an exemplary pseudo-code describing the training phase according to one embodiment;
- Fig. 3 presents an examplary pseudo-code describing the verification phase; and
- Fig 4 illustrates an exemplary clustering process.

### Detailed Description of the Invention

In the following description, for the purpose of illustration, numerous specific details are provided. As will be apparent to the skilled person, however, the invention is not limited to such specific details and the skilled person will be able to devise alternative arrangements.

The method according to the present invention suggests verifying a user based on few dozen freely typed keystrokes in the course of a short session. Thus, the time which is necessary for detecting an imposter is substantially reduced. The method allows reducing the detecting time by utilizing a compact representation of the keystroke patterns by joining similar pairs of consecutive keystrokes (di-graph). Such representation reduces the session size required for inducing the user's verification model.

The large number of di-graphs and the short sessions result in two major challenges: (1) the curse of dimensionality and (2) the sparseness of the features vector. Typically, in continuous verification, di-graphs, which represent a pair of consecutive keystrokes, are used as a major feature representation. A standard keyboard contains 104 keys, thus there are potentially 10,816 combinations of di-graphs. Although not all combinations are used by the users, which can vary based on the typed language and the applications used, there are still hundreds of features that are extracted.

The above dimensionality problem requires more sessions (instances) in the training set for inducing the user's verification model. It is well known that the required number of instances for supervised learning increases as a function of dimensionality. The required number of training instances for a linear classifier is linearly related to the dimensionality and for a quadratic classifier to the square of the dimensionality. In terms of nonparametric classifiers such as decision trees, the situation is even more severe. It has been estimated that, as the number of dimensions increases, the training set size needs to increase exponentially in order to obtain an effective estimate of multivariate densities. This phenomenon is known as the "curse of dimensionality". Techniques that are efficient in low dimensions, such as decision trees inducers, fail to provide meaningful results when the number of dimensions increases beyond a 'modest' size.

The method according to the present invention assumes that the long session, which refers to the number of keystrokes used to create a features vector, is required for verification purposes due to the relatively high dimension of the features vector. Reducing the session length using the same feature representation, results in sparsity, namely, many features that have no value and cannot be used for the verification process. Thus, the classifier might be misled by the sparse features vector and may have difficulties in correctly classifying it. For that reason, the present invention defines a new feature reduction strategy in order to reduce the dimension of the features vector and to ease the above problems.

The reduction strategy proposed by the method according to one embodiment of the present invention, clusters "similar" keystrokes, particularly di-graphs, based on their temporal features. After reducing the dimensionality of the features vector that describes a session, a features vector is extracted from each input stream of keystrokes (session), to form a model representing the user typing patterns for the verification process.

The method according to the present invention suggests clustering "similar" n-graphs for achieving features reduction. In one embodiment the method is divided into two phases, namely, training and verification. Fig. 2 presents an exemplary pseudo-code describing the training phase in which the user verification model is created. In the training phase input streams of keystrokes performed by each of trained users are recorded and verification models are built. The verification model consists of a multi-class classifier (C) and a mapping function (M), for the user (u) based on all users' sessions (S). Therefore, a vocabulary (Vᵤ) that consists of n-graphs is created by extracting the user's unique n-graphs from his training sessions (Sᵤ). The mean of the temporal feature is then calculated for each n-graph in the vocabulary based on all its instances in the user training sessions (Sᵤ). Afterwards a clustering technique is applied and the means of the temporal features are clustered into k clusters. When the mean temporal features of different n-graphs can be clustered into the same cluster, they are considered "similar". The result of the clustering is a mapping function from an n-graph in the original user vocabulary to a cluster (M<v,c>). The users' sessions (S) are then transformed to features vectors (FVs) by extracting for each user the means of his temporal features and then mapping them to a cluster corresponding to the mapping function. Finally a multi-class classifier (C) is trained based on these features vectors (FVs).

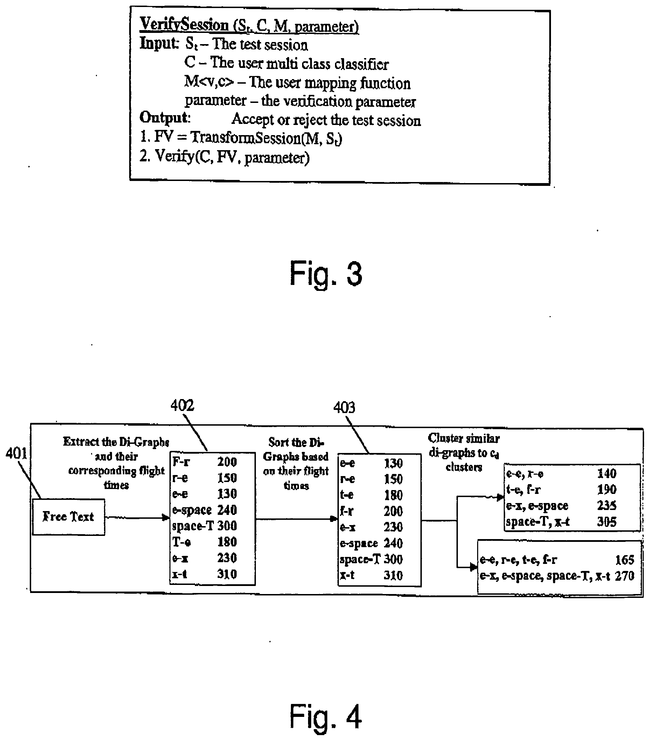

Fig. 3 presents an examplary pseudo-code describing the versification phase which verifies real-time sessions (streams of keystrokes) based on the trained user model. In the verification phase, given a session to verify (Sₜ), St is transformed to a features vector based on the mapping function which was created during the training phase and verifies it based on the classifier (C), given the verification parameter. The process of creating the verification model (C and M) is performed for each user separately because the temporal features are different and have the ability to discriminate among users. Thus, for each user, the n-graphs are clustered in a different way, which leads to a different classifier. The rationale behind this technique is that "similar" n-graphs can be considered as the same feature since they have the same characteristics.

In order to cluster the n-graphs and to decide which n-graphs are similar, the n-graphs are sorted based on their temporal features. Then, the n-graphs whose times difference are small are considered as similar n-graphs and d similar n-graphs are grouped together into one grouped cluster. The cluster temporal feature is the average of the temporal features of all the grouped n-graphs that it contains. Since the n-graphes are clustered to k clusters, the size of the features vector is predefined in advance, and referred hereinafter as k. Fig 4 illustrates an exemplary clustering process. In this example the string "Free Text" 401 is clustered using di-graphs 402-403 and two different clustering sizes: k = 4 and k = 2. The di-graphs and their corresponding temporal features are extracted from the string, sorted, and clustered, based on their temporal features to k clusters.

The main question that arises in regard to this technique is the optimal size of clusters (k) the di-graphs should be clustered to in order to get the best representation of the user's typing. This will lead to the most discriminative features vector, creating the potential for higher accuracy. Clustering the di-graphs into too many clusters (or not clustering them at all), results in large and potentially sparse features vectors, which leads to an inaccurate model. On the other hand, clustering the di-graphs into too few clusters might result in a small features vector and clusters with high variance which decreases the ability to discriminate among users. Thus, an optimal size of clusters for determining the size of the features vector is required.

In order to verify a user, a model based on his sessions has to be learned. This model is then used to verify each session's features vector. Often in classification, binary classifiers are used. However, in the domain of continuous verification using keystroke dynamics and generally in biometric domains, there are samples of the verified user and the alternative class is not clear since it should contain all potential imposters. Thus, the use of multi-class classification is very useful, in which the classifier is trained on n users (classes) which one of them is the verified user. Then, when the classifier needs to classify new unseen sample x, it generates a vector of probabilities Vx= [pᵤ₁, pᵤ₂, ..., pᵤₙ], where pᵤᵢ indicates the probability that x belongs to the i^{th} user. Typically, the classifier classifies x to the user with the highest probability. However, the classification process according to one embodiment of the present invention is changed in order to be able to adjust the system's measurements to the desired preferences by allowing the verified user to get a probability of more than pₜ and not only if he has the highest probability among the users. pₜ is a predefined threshold that controls the system's measures. Low pₜ increases the system FAR and decreases its FRR, while a high pₜ has the opposite effect.

The data collection used in the experiments performed by the present application is the dataset that was recorded in the experiments disclosed by Gunetti et a1. In this dataset only the key down events and their corresponding ASCII values are recorded, without their corresponding key-up events. Thus, the only temporal feature that could be extracted is the flight time. The following equation defines the measure of the flight time based on two consecutive keystrokes (di-graph) *flight*(ksᵢ, ksᵢ₊₁) = ksᵢ₊₁^{D} - ksᵢ^{D}.

The dataset contains 21 legitimate users, each one typed 15 sessions. Moreover, it also contains 165 users who represent attackers (importers) who typed one session each. All the participants could type whatever they wanted and whenever they wanted to, using their own computers and their preferred browsers. Each collected session, which consists of keystrokes, has a different length, since the users could stop typing whenever they felt that they had finished the experiment. The mean length of the collected sessions varied between 716 and 1457 keystrokes. However, with such amount of keystrokes in every session, the system detection time is long enough to enable an imposter to do a serious damage. Thus, it is more appropriate to verify a user after he typed only part (e.g., 3/4, 1/2 or 1/4) of the original session length.

The following aspects of the present invention were considered:
1. Optimal session length - as one of the goals of this experiment is to verify a user on a short session, in order to reduce the detection time, it is expected to achieve higher accuracy for a longer session, since it would contain more di-graphs for verification. Therefore, four different session lengths were investigated: full session, three-quarters session, half session and quarter session.
2. The optimal number of clusters (k) - different numbers of clusters were tested, namely, 1, 10, 20 and so on (in jumps of 10) until a maximum number of clusters is reached, in which each di-graph feature has its own exclusive place in the features vector and no clustering of di-graphs is made.
3. The results received by the method according to the present application are compared to the results received by Gunetti et al., unfortunately, due to privacy issues, only 21 out of the 40 legitimate users that participated in Gunetti et al. experiments participated in the experiments of the present application. On the other hand, all the users (165) who were used to attack the legitimate users in Gunetti et al. experiments attack the legitimate users in the experiments of the present application. In all the experiments a leave-one-out 15 cross-validation mechanism performed and a multi-class classifier based on the random forest algorithm is used.

### Comparison Example 1

The first experiment tested the shortest session, namely the 1/4 session, which allows the fastest detection. When using 1/4 session, there are only 680 combinations of di-graphs which were typed by the users. The best results in this experiment achieved when the di-graphs were clustered into 150 clusters, which roughly cluster three similar di-graphs into one cluster. The representation of the 150 clusters is referred hereinafter as the superior representation or the superior cluster size. In order to show the improvement, the superior cluster has been compared to the two extreme clusters: one cluster, in which all the di-graphs are grouped together into one cluster, and the maximum clusters, namely the 680 combinations in which each di-graph feature has its own exclusive place in the features vector and no clustering was made. With respect to the AUC, the two extreme clusters achieved AUC of 0.0919 and of 0.0244 for one cluster and the maximum clusters respectively, while the superior clusters (150) achieved an AUC of only 0.0047. Thus, the clustering of similar di-graphs is an essential process in order to reduce the sparseness of the features vector and to improve classifier performance.

Moreover, in every cluster in general and in the superior clusters in particular, the classifiers can be adjusted according to required preferences. For example if a zero FRR is required, which means that the system will never reject a legitimate user, the threshold is set to 0.145 and the system FAR will then be only 5.0193%. On the other hand, if some FRR is acceptable at the expanse of lower FAR, the system threshold can be increased to 0.205 to receive 4.7619% FRR and 1.1583% FAR. Finally when comparing those results with Gunetti et al., the present invention allows setting the threshold to 0.25 providing a 0.2574% FAR and a 23-8095% FRR which are both better than the best results disclosed by Gunetti et al., namely, 0.3951% FAR and 29.1667% FRR.

### Comparison Example 2

This experiment tested other sessions of varying lengths. The following table summarizes the results for the various session lengths. The table presents the FAR when the FRR is 0%, because in the domain of continuous verification, the system ceaselessly verifies the user. Thus, the FRR is important at least as the FAR, since a high FRR disturbs the user regular work, and decreases the system acceptance. Furthermore, these results are the best results with respect to the ER.

**Table 1: Experiment Results for Various Session Lengths**

| **Session length** | **k** | **Pt** | **FAR** | **FRR** | **ER** |
|---|---|---|---|---|---|
| 1/2 session | 300 | 0.23 | 0.61% | 0% | 0.30% |
| 3/4 session | 230 | 0.28 | 0.43% | 0% | 0.21% |
| Full session | 360 | 0.28 | 0.30% | 0% | 0.15% |

Table 1 clearly shows that the classifier improved its results as the session length increased. Moreover, the threshold of the system (Pt) should be adjusted according to the session length; the longer the session, the higher the threshold that is required in order to achieve better results with respect to ER.

### Comparison Example 3

In this experiment an ensemble of classifiers that consists of multi-class classifiers is constructed, where each classifier is built on a different representation of the user's typing. Each classifier learns the same data (sessions) but with a different representation, depending on the number of clusters (k). When the ensemble classifier has to verify a user based on a new unseen session, each classifier that belongs to the ensemble gives a probability in respect to the session belonging to this user. The probabilities are then averaged and a decision is made whether to accept or reject the user based on the predefined threshold (pₜ).

In order to create an effective ensemble classifier, we constructed one ensemble based on the user representations that had achieved the best results with respect to the AUC. Many ensemble sizes were tested, from ensemble classifiers that consist of only two classifiers to ensemble

**Table 2: Results of the Ensemble Approach**

| **Session length** | **K** | **Pt** | **FAR** | **FRR** | **ER** |
|---|---|---|---|---|---|
| 1/4 session | 90,150,410 | 0.15 | 3.47% | 0% | 1.73% |
| 1/2 session | 300,540 | 0.22 | 0.59% | 0% | 0.2% |
| 3/4 session | 230,380,430 | 0.25 | 0.54% | 0% | 0.27% |
| Full session | 360,570 | 0.29 | 0.18% | 0% | 0.09% |

classifiers that contain five classifiers. The following table presents the best ensemble classifier for each session length.

Table 2 shows that the ensemble approach improved the results with respect to all measurements (AUC, FAR, FRR and ER). In order to compare the results received by the system of the present intention to the best results as received by Gunetti et al., the system measurements were adjusted by tuning the threshold (pt) as close as possible to Gunetti et al. results. The following table presents the results comparison between both methods.

**Table 3: Comparison Between Both Methods**

| **Session length** | **Method** | **FAR** | **FRR** | **ER** |
|---|---|---|---|---|
| 1/4 session | Present | 0.12% | 23.80% | 11.96% |
| | Gunetti et al. | 0.39% | 29.16% | 14.78% |
| 1/2 session | Present | 0.15% | 9.52% | 4.83% |
| | Gunetti et al. | 0.10% | 11.83% | 5.96% |
| 3/4 session | Present | 0.07% | 9.52% | 4,80% |
| | Gunetti et al. | 0.05% | 6.66% | 3.35% |
| Full session | Present | 0.07% | 4.76% | 2.41% |
| | Gunetti et al. | 0.02% | 3.16% | 1.597% |

Table 3 shows that the ensemble method, proposed by the present invention, achieves better results, when the session length is short (a quarter and a half). This result is rational, since short sessions create very sparse features vector. Thus our proposed method as a preprocessing step helps the classifier to correctly classify a session.

As mentioned hereinabove, the present invention teaches the necessity of verifying users based on their keystroke dynamics, especially after the authentication process has successfully ended. The present invention introduces a features reduction method that is used for each user separately based on similar di-graphs. Even though the method has been exampled hereinabove, only on di-graphs and their corresponding flight times, it is applicable on any n-graph type (e.g., tri-graphs, fourth-graph) and on any temporal feature (e.g., interval time, dwell time).

The evaluation of the data collection consisted 21 legitimate users, and 165 attackers. Even with the shortest sessions (1/4 session), a very good results have been achieved, namely 3.47% FAR and 0% FRR. Keystrokes biometric is most effective when the session length is as short as possible and the user is verified every few keystrokes to reduce the detection time. Thus the proposed method is a very essential because short sessions create very sparse features vectors, which decrease the classifier accuracy. Furthermore, the method is adapted to work with any classification algorithm (e.g., artificial neural networks).

The above examples and description have of course been provided only for the purpose of illustration, and are not intended to limit the invention in any way. As will be appreciated by the skilled person, the invention can be carried out in a great variety of ways, employing more than one technique from those described above, all without exceeding the scope of the invention.

## Claims

1. A method for reducing the time for verifying users via keystroke dynamics, comprising:
i) building a user verification model representing user typing patterns in a training phase during which a group of users are trained; and
ii) in a verification phase, recording input real-time streams of keystrokes performed by each of said trained users, transforming each of said real-time streams to a features vector, generating a vector of probabilities indicating the probabilities that said real-time transformed features vectors belongs to each of said users, and using a classifier with respect to said transformed features vectors,
***characterized in that*** said user verification model is built by
iii) creating a vocabulary (Vu) consisting of n-graphs of keystrokes by extracting n-graphs unique to each of said trained users (u), from all instances of his training sessions (Sᵤ);
iv) calculating a mean of a temporal feature for each n-graph in said vocabulary;
v) clustering said mean temporal features of different n-graphs into a number (k) of clusters wherein similar mean temporal features of different n-graphs are clustered into a same cluster, resulting in a mapping function (M<v,c>) from an n-graph **in that** vocabulary to a cluster; and
vi) training a multi-class classifier (C) with respect to a given verification parameter for a plurality (n) of said trained users including a verified user, based on said features vectors,
***and in that*** said verification phase further comprises the steps of:
vii) transforming each of real-time streams of an unseen sample (x) to a features vector based on said mapping function for each user to be verified;
viii) inputting said verification parameter and each of said transformed features vectors to said classifier; and
ix) classifying each of said real-time streams of said unseen sample and associating each of said classified streams with the trained user with the highest probability; and
x) accepting or rejecting each of said real-time streams of said unseen sample.

2. A method according to claim 1, **characterized in that** it further comprises: defining a threshold (pₜ) for controlling the system's measures, wherein said measures are taken from the group consisting: false acceptance rate (FAR), false reject rate (FRR), error rate (ER), error curve (EC), and area under curve (AUC).

3. A method according to claim 1, **characterized in that** real-time streams of keystrokes are ceaselessly verified, thereby providing a continuous verification.

4. A method according to claim 1, **characterized in that** an optimal cluster size is determined, in order to get the best representation of the user's typing.

5. A method according to claim 1, **characterized in that** the n-graphs are selected from the group consisting of di-graphs, tri-graphs and fourth-graphs.

6. A method according to claim 2, **characterized in that** the threshold (pₜ) is a probability threshold.

7. A method according to claim 2, **characterized in that** it further comprises accepting or rejecting the user associated with each of the classified streams based on the threshold.

## Patentansprüche

1. Verfahren zur Reduzierung der zur Verifizierung von Benutzern über das Tippverhalten erforderlichen Zeit, umfassend:
i) Erstellen eines Benutzerverifizierungsmodells, welches Benutzer-Tippmuster darstellt, in einer Trainingsphase, in der eine Gruppe von Benutzern trainiert wird, und
ii) in einer Verifizierungsphase: Aufzeichnen von Echtzeit-Eingabeströmen von Tastenanschlägen, die von jedem der trainierten Benutzer ausgeführt werden, Transformieren jedes der Echtzeit-Ströme in einen Merkmalsvektor, Generieren eines Vektors von Wahrscheinlichkeiten, welcher die Wahrscheinlichkeiten angibt, mit welchen die in Echtzeit transformierten Merkmalsvektoren zu jedem der Benutzer gehören, und Verwenden eines Klassifikators in Bezug auf die transformierten Merkmalsvektoren,
***dadurch gekennzeichnet, dass*** das Benutzerverifizierungsmodell erstellt wird durch
iii) Erzeugen eines Vokabulars (Vu), bestehend aus N-Graphen von Tastenanschlägen, durch Extrahieren von N-Graphen, die für jeden der trainierten Benutzer (u) einzigartig sind, aus allen Ereignissen seiner Trainingssitzungen (Sᵤ),
iv) Berechnen des Mittels eines zeitlichen Merkmals für jeden N-Graphen in dem Vokabular,
v) Clustern der mittleren zeitlichen Merkmale unterschiedlicher N-Graphen in eine Anzahl (k) von Clustern, wobei ähnliche mittlere zeitliche Merkmale unterschiedlicher N-Graphen in denselben Cluster geclustert werden, so dass eine Abbildungsfunktion (M<v,c>) eines N-Graphen in dem Vokabular auf einen Cluster resultiert, und
vi) Training eines Multi-Class-Klassifikators (C) in Bezug auf einen gegebenen Verifizierungsparameter für eine Mehrzahl (n) der trainierten Benutzer, welche einen verifizierten Benutzer umfasst, auf der Grundlage der Merkmalsvektoren,
*und dass* die Verifizierungsphase des Weiteren die folgenden Schritte umfasst:
vii) Transformieren jedes der Echtzeit-Ströme einer ungesehenen Probe (x) in einen Merkmalsvektor auf der Grundlage der Abbildungsfunktion für jeden zu verifizierenden Benutzer,
viii) Eingeben des Verifizierungsparameters und jedes der transformierten Merkmalsvektoren in den Klassifikator, und
ix) Klassifizieren jedes der Echtzeit-Ströme der ungesehenen Probe und Zuordnen jedes der klassifizierten Ströme zu dem trainierten Benutzer mit der höchsten Wahrscheinlichkeit, und
x) Akzeptieren oder Zurückweisen jedes der Echtzeit-Ströme der ungesehenen Probe.

2. Verfahren nach Anspruch 1, **dadurch gekennzeichnet, dass** es des Weiteren umfasst: Definieren eines Schwellenwerts (pₜ) für das Steuern der Maßnahmen des Systems, wobei die Maßnahmen aus der Gruppe bestehend aus Falschakzeptanzrate (FAR), Falschrückweisungsrate (FRR), Fehlerrate (ER), Fehlerkurve (EC) und Fläche unter der Kurve (AUC) ausgewählt werden.

3. Verfahren nach Anspruch 1, **dadurch gekennzeichnet, dass** Echtzeit-Ströme von Tastenanschlägen ohne Unterbrechung verifiziert werden, wodurch eine kontinuierliche Verifizierung bereitgestellt wird.

4. Verfahren nach Anspruch 1, **dadurch gekennzeichnet, dass** eine optimale Clustergröße bestimmt wird, um die beste Darstellung des Tippverhaltens des Benutzers zu erhalten.

5. Verfahren nach Anspruch 1, **dadurch gekennzeichnet, dass** die N-Graphen ausgewählt werden aus der Gruppe bestehend aus Digraphen, Trigraphen und Vier-Graphen.

6. Verfahren nach Anspruch 2, **dadurch gekennzeichnet, dass** der Schwellenwert (pₜ) ein Wahrscheinlichkeitsschwellenwert ist.

7. Verfahren nach Anspruch 2, **dadurch gekennzeichnet, dass** es des Weiteren das Akzeptieren oder Zurückweisen der jedem der klassifizierten Ströme zugeordneten Benutzer auf der Grundlage des Schwellenwerts umfasst.

## Revendications

1. Un procédé de réduction du temps de vérification d'utilisateurs par l'intermédiaire de dynamiques de frappe au clavier, comprenant :
i) la construction d'un modèle de vérification d'utilisateur représentant des modèles de saisie au clavier d'utilisateur dans une phase d'apprentissage au cours de laquelle un groupe d'utilisateurs est formé, et
ii) dans une phase de vérification, l'enregistrement de flux en entrée en temps réel de frappes au clavier exécutées par chacun desdits utilisateurs formés, la transformation de chacun desdits flux en temps réel en un vecteur de caractéristiques, la génération d'un vecteur de probabilités indiquant les probabilités que lesdits vecteurs de caractéristiques transformés en temps réel appartiennent à chacun desdits utilisateurs, et l'utilisation d'un classificateur par rapport auxdits vecteurs de caractéristiques transformés,
***caractérisé en ce que*** ledit modèle de vérification d'utilisateur est construit par
iii) la création d'un vocabulaire (Vu) consistant en graphes à n sommets de frappes au clavier par l'extraction de graphes à n sommets uniques à chacun desdits utilisateurs formés (u) à partir de la totalité des instances de ses sessions d'apprentissage (Sᵤ),
iv) le calcul d'une moyenne d'une caractéristique temporelle pour chaque graphe à n sommets dans ledit vocabulaire,
v) la mise en grappes desdites caractéristiques temporelles moyennes de différents graphes à n sommets en un nombre (k) de grappes, des caractéristiques temporelles moyennes similaires de différents graphes à n sommets étant regroupées en grappes en une même grappe, résultant en une fonction de mise en correspondance (M<v,c>) à partir d'un graphe à n sommets dans ce vocabulaire avec une grappe, et
vi) la formation d'un classificateur à classes multiples (C) par rapport à un paramètre de vérification donné pour une pluralité (n) desdits utilisateurs formés comprenant un utilisateur vérifié, en fonction desdits vecteurs de caractéristiques, et
***en ce que*** ladite phase de vérification comprend en outre les étapes suivantes :
vii) la transformation de chacun des flux en temps réel d'un échantillon non vu (x) en un vecteur de caractéristiques en fonction de ladite fonction de mise en correspondance pour chaque utilisateur à vérifier,
viii) l'entrée dudit paramètre de vérification et de chacun desdits vecteurs de caractéristiques transformés dans ledit classificateur, et
ix) le classement de chacun desdits flux en temps réel dudit échantillon non vu et l'association de chacun desdits flux classés à l'utilisateur formé possédant la probabilité la plus élevée, et
x) l'acceptation ou le rejet de chacun desdits flux en temps réel dudit échantillon non vu.

2. Un procédé selon la revendication 1, **caractérisé en ce qu'**il comprend en outre : la définition d'un seuil (pₜ) destiné à contrôler les mesures du système, lesdites mesures étant extraites du groupe se composant de : taux d'acceptations erronées (FAR), taux de refus erronés (FRR), taux d'erreur (ER), courbe d'erreur (EC) et zone sous la courbe (AUC).

3. Un procédé selon la revendication 1, **caractérisé en ce que** des flux en temps réel de frappes au clavier sont vérifiés en permanence, fournissant ainsi une vérification en continu.

4. Un procédé selon la revendication 1, **caractérisé en ce qu'**une taille de grappe optimale est déterminée, afin d'obtenir la meilleure représentation de la saisie au clavier de l'utilisateur.

5. Un procédé selon la revendication 1, **caractérisé en ce que** les graphes à n sommets sont sélectionnés dans le groupe se composant de graphes à deux sommets, graphes à trois sommets et graphes à quatre sommets.

6. Un procédé selon la revendication 2, **caractérisé en ce que** le seuil (pₜ) est un seuil de probabilité.

7. Un procédé selon la revendication 2, **caractérisé en ce qu'**il comprend en outre l'acceptation ou le rejet de l'utilisateur associé à chacun des flux classés en fonction du seuil.
